# EUROPÄISCHE PATENTSCHRIFT

(11) **EP 2 936 014 B1**
(45) Veröffentlichungstag und Bekanntmachung des Hinweises auf die Patenterteilung: **08.03.2017**
(21) Anmeldenummer: 13805365.7
(22) Anmeldetag: 13.12.2013
(51) Int. Cl.: F25D 23/02

(54) **HAUSHALTSKÄLTEGERÄT**
HOUSEHOLD REFRIGERATION APPLIANCE
APPAREIL DE FROID MÉNAGER

(30) Priorität: 18.12.2012 DE 102012223544
(43) Veröffentlichungstag der Anmeldung: 28.10.2015
(73) Patentinhaber: BSH Hausgeräte GmbH, 81739 München (DE)
(72) Erfinder: EHNINGER, Christian, 89537 Giengen an der Brenz (DE); GÖRZ, Alexander, 73432 Aalen (DE); SEELMEIER, Michael, 73572 Heuchlingen (DE)
(86) Internationale Anmeldenummer: PCT/EP2013/076544
(87) Internationale Veröffentlichungsnummer: WO 2014/095632

(56) Entgegenhaltungen:
- WO-A1-96/39894
- WO-A1-2007/065554
- DE-B- 1 056 630
- US-A- 2 036 781
- US-A- 2 084 204
- US-A- 2 768 046

## Beschreibung

Die Erfindung betrifft ein Haushaltskältegerät mit einer Wandungsanordnung, die Wandungsanordnung mit einer ersten Wandung, die einen thermischen Isolationskörper aufweist, und eine separate zweite Wandung umfasst, die benachbart und in einem Winkel zum Isolationskörper angeordnet ist.

Bei Haushaltskältegeräten, wie beispielsweise einem Kühlgerät oder einem Gefriergerät oder einem Kühl-Gefrier-Kombigerät wird ein Innenraum, in dem Kältegut in Form von Lebensmitteln, die Speisen und Getränke umfassen, durch Wandungen begrenzt. Dazu kann ein Innenbehälter vorgesehen sein, der frontseitig eine Öffnung aufweist, die durch eine Tür verschließbar ist. Auch die Tür stellt in dem Zusammenhang eine Wandung dar.

Die thermischen Isolationskörper können in unterschiedlicher Ausgestaltung vorgesehen sein. So ist bekannt, dass ein Isolationsschaum vorgesehen ist. Ebenso sind bei neueren Ausgestaltungen Vakuumisolationselemente bekannt. So ist beispielsweise aus der WO 2012/031885 A2 ein Gehäuse für ein Kältegerät bekannt, bei dem ein Isolationskörper durch eine äußere und eine innere Schale begrenzt ist und in einem Zwischenraum zwischen den Schalen eine Isolationsmaterialpackung angeordnet ist. Das Isolationsmaterial kann beispielsweise ein hochporöser Feststoff sein.

Aus der DE 10 2009 002 800 A1 ist ein Haushaltskältegerät und eine wärmeisolierende Wandung dafür bekannt. Bei dieser Ausgestaltung kann der Isolationskörper zwei Schalen bzw. Häute aufweisen, zwischen denen wiederum ein Hohlraum ausgebildet ist, der evakuiert sein kann. Bei einer Ausführung kann vorgesehen sein, dass eine Haut dieses Isolationskörpers selbst einen eckigen Rahmen aufweist, an dem dann eine plattenartige Innenhaut und eine Außenhaut befestigt sind, so dass dadurch eine Gesamthülle für den Isolationskörper gebildet ist.

Bei derartigen plattenartigen Isolationskörpern ist die Positionierung und Befestigung schwierig. In dem Zusammenhang kann ein vollflächiges Ankleben beispielsweise an einem Innenbehälter oder aber auch an einer Innenseite des Außenbehälters vorgesehen sein. Beispielsweise kann der Außenbehälter dann eine äußere Gehäusewand bilden, die den Innenbehälter umgibt. Der Zwischenraum zwischen dem Innenbehälter und dem Außenbehälter kann zusätzlich dann noch mit einem thermisch isolierenden Schaummaterial ausgefüllt sein.

Gerade bei einer Tür ist ein derartiger Aufbau jedoch montageintensiv und die Tür durch die Vielzahl der Komponenten auch relativ dick gestaltet. Dadurch wird entweder das Gerät vergrößert oder ein Nutzvolumen des Innenraums verkleinert.

Bei den bekannten Anordnungen ist die Einbringung des thermischen Isolationskörpers, welcher auch evakuiert sein kann, relativ aufwändig. Insbesondere auch das Halten eines Isolationskörpers ist durch zusätzlichen Montageaufwand und zusätzliche Materialien, wie beispielsweise Schaummaterial zur Umschäumung erforderlich.

Ferner beschreibt die WO 2007/06554 A1 eine Gefrierschranktürbaugruppe, welche eine Glastür und einen Türpfosten, an dem die Glastür in Schließstellung über eine flexible Dichtung anliegt, aufweist. Dabei weist die Glastür einen Scheibenverbund auf und der Scheibenverbund ist an seinem, in der Schließstellung dem Türpfosten benachbarten, vertikalen Randabschnitt von einem Rahmenprofil aufgenommen und die flexible Dichtung ist zwischen dem Rahmenprofil und dem Türpfosten angeordnet. Weiterhin ist es vorgesehen, dass das Rahmenprofil einen Kunststoff-Profilgrundkörper hat, der an seinen Sichtseiten zumindest teilweise mit einer Dekorschicht beschichtet ist.

Ferner beschreibt die WO 96/39894 A1 ein Haushaltsgerät, welches eine Befestigungsstruktur und eine Mehrzahl von Vakuumisolationspanelen aufweist, welche von der Befestigungsstruktur gehalten sind, sodass diese im Wesentlichen eine isolierte Schale bilden.

Aus der DE 1 056 630 ist eine Isolationsanordnung unter Verwendung von thermischen Isolationskörpern bekannt.

Es ist daher Aufgabe, ein Haushaltskältegerät mit einer Wandungsanordnung zu schaffen, die eine mechanisch stabile Halterung des thermischen Isolationskörpers ermöglicht und darüber hinaus der Wärmeaustausch zwischen einem durch die Wandungsanordnung begrenzten Raum und der Umgebung dazu verbessert ist.

Diese Aufgabe wird durch ein Haushaltskältegerät gemäß dem unabhängigen Anspruch gelöst.

Bei einem erfindungsgemäßen Haushaltskältegerät umfasst die Wandungsanordnung eine erste Wandung, die einen thermischen Isolationskörper aufweist. Die Wandungsanordnung umfasst darüber hinaus eine zweite Wandung, die separat zur ersten Wandung ausgebildet ist und die benachbart dazu in einem Winkel zum Isolationskörper angeordnet ist. Der Isolationskörper ist von einem separaten Trägerrahmen der ersten Wandung gehalten und umfangsseitig zumindest bereichsweise umgeben. Der Trägerrahmen umfasst ein Begrenzungselement, welches sich in Tiefenrichtung der ersten Wandung betrachtet hinter eine Rückseite des Isolationskörpers erstreckt und eine der zweiten Wandung zugewandte und davon beabstandete Begrenzungsseite aufweist. Diese Begrenzungsseite des Begrenzungselements bildet mit einer Begrenzungsseite der zweiten Wandung einen kleinen Luftspalt. Durch eine derartige Ausgestaltung einer Wandungsanordnung ist eine mechanisch stabile und im Hinblick auf den Montageaufwand reduzierte Anbringung eines Isolationskörpers ermöglicht. Durch den Trägerrahmen wird eine Halterung geschaffen, die den Isolationskörper aufnimmt und entsprechend positioniert. Dieses zusätzliche Bauteil in Form des Trägerrahmens ist darüber hinaus multifunktionell gestaltet, da es neben der Haltefunktion des Isolationskörpers auch gleichzeitig zur Gestaltung eines Luftspalts mit einer anderen Komponente, nämlich der zweiten Wandung, beiträgt. Durch einen derartigen Luftspalt wird gerade am Übergang zwischen der ersten und der zweiten Wandung ein unerwünschter Wärmeaustausch zwischen dem Innenraum, der durch die Wandungsanordnung begrenzt ist, und der Umgebung dazu verhindert.

Vorzugsweise ist vorgesehen, dass der Luftspalt sich vollständig hinter der Rückseite des Isolationskörpers erstreckt. Die oben genannten Vorteile bezüglich des verminderten Wärmeaustausches werden dadurch besonders begünstigt.

Insbesondere ist vorgesehen, dass der Luftspalt durch eine Vorderseite der zweiten Wandung, die an dem Begrenzungselement anliegt, begrenzt ist. Das Begrenzungselement erstreckt sich an der Rückseite des Isolationskörpers, so dass in dem Zusammenhang auch dieses Begrenzungselement einen vorderen Wandabschluss des Luftspalts bildet.

Vorzugsweise ist vorgesehen, dass der Luftspalt in Tiefenrichtung betrachtet von dem Isolationskörper schräg verlaufend angeordnet ist. Eine derartige Ausgestaltung bringt Vorteile im Hinblick auf die Länge des Luftspalts. Gegenüber einer rein in Tiefenrichtung orientierten Ausgestaltung des Luftspalts kann durch diese vorteilhafte Ausgestaltung eine im Vergleich dazu größere Länge des Luftspalts erzielt werden. Dadurch ist das Volumen des Luftspalts vergrößert, wodurch sich mehr stehende Luft in dem Luftspalt aufhalten kann. Durch diese stehende Luft wird die Isolationswirkung erreicht und in konsequenter Weise dazu verbessert, je größer dieses Luftvolumen ist. Durch die Schrägstellung wird darüber hinaus auch erreicht, dass das Begrenzungselement nicht mit einer unerwünschten Tiefe sich hinter dem Isolationskörper erstreckt und somit auch in den von der Wandungsanordnung begrenzten Innenraum erstreckt. Das Nutzvolumen dieses Innenraums wird dadurch nicht unerwünschterweise eingeschränkt.

Vorzugsweise ist vorgesehen, dass das Begrenzungselement ein Hohlprofilkörper ist. Insbesondere ist dieses Begrenzungselement ein im Querschnitt geschlossener Hohlprofilkörper. Durch diese Ausgestaltung ist ein mechanisch besonders stabiles Bauteil geschaffen, welches darüber hinaus durch die Hohlraumkonstruktion jedoch sehr gewichtsminimiert gebildet ist. Darüber hinaus wird gerade durch eine derartige Geometrie auch die Möglichkeit geschaffen, dass an dem Begrenzungselement selbst weitere Funktionalitäten geknüpft sind. So kann vorgesehen sein, dass an diesem Begrenzungselement weitere eigene separate Funktionsbauteile angebracht sind oder angebracht werden können.

Vorzugsweise ist vorgesehen, dass der Trägerrahmen eckig ausgebildet ist und die eckige Geometrie bildende Trägerrahmenteile aufweist.

Es ist in dem Zusammenhang möglich, dass der Trägerrahmen mit seinen Trägerrahmenteilen einstückig ausgebildet ist. In dem Zusammenhang kann beispielsweise ein Spritzgussbauteil ausgebildet sein. Der Trägerrahmen ist dann aus Kunststoff gebildet. Es kann vorgesehen sein, dass der Trägerrahmen aus einem Kunststoffmaterial oder aus zumindest zwei verschiedenen Kunststoffmaterialien, beispielsweise als 2K-Spritzgussteil, hergestellt ist.

Ebenso kann es jedoch auch vorgesehen sein, dass der Trägerrahmen aus mehreren separaten Trägerrahmenteilen ausgebildet ist, die dann durch entsprechende Verbindungen verbindbar sind. Es kann in dem Zusammenhang eine zerstörungsfrei lösbare Verbindung, wie beispielsweise eine Steckverbindung, eine Rastverbindung oder eine Schraubverbindung vorgesehen sein. Ebenso können jedoch auch zerstörungsfrei unlösbare Verbindungen, wie beispielsweise eine Nietverbindung oder eine Klebeverbindung, vorgesehen sein.

Vorzugsweise ist vorgesehen, dass die Trägerrahmenteile zumindest bereichsweise als Hohlprofilkörper ausgebildet sind. Insbesondere ist vorgesehen, dass sie im Querschnitt in Umlaufrichtung betrachtet als geschlossener Hohlprofilkörper ausgebildet sind.

In bevorzugter Weise ist vorgesehen, dass ein Trägerrahmenteil und ein Begrenzungselement im Querschnitt betrachtet beabstandet zueinander angeordnet sind und mit einem Verbindungssteg verbunden sind. Eine derartige Ausgestaltung des Trägerrahmens ermöglicht eine sehr kompakte und gewichtssparende Ausgestaltung, die dennoch zwischen dem Trägerrahmenteil und dem Begrenzungselement mechanisch äußerst stabil ausgebildet ist. Gerade an dem Verbindungsbereich zwischen dem Trägerrahmenteil und dem Begrenzungselement ist der Trägerrahmen somit äußerst dünn und kompakt aufgebaut. Ein Bereich zwischen dem Isolationskörper und der zweiten Wandung ist daher sehr dünn gestaltet, da sich vorzugsweise nur dieser Verbindungssteg darin erstrecken muss.

Nicht zuletzt wird durch diese Ausgestaltung auch ein Bauteil geschaffen, welches im Verbindungsbereich zwischen dem Trägerrahmenteil und dem Begrenzungselement auch hochflexibel formbar ist und sich dadurch an unterschiedlichste Geometrien anformen lässt.

Vorzugsweise ist vorgesehen, dass sich das Begrenzungselement im Querschnitt der Wandungsanordnung betrachtet in Breitenrichtung gesehen ausschließlich hinter dem Isolationskörper erstreckt. Insbesondere ist es vorgesehen, dass das Trägerrahmenteil im Querschnitt der Wandungsanordnung betrachtet und in Breitenrichtung gesehen ausschließlich neben dem Isolationskörper erstreckt. Insbesondere umgreift das Trägerrahmenteil somit den Isolationskörper nur umfangsseitig und somit an dessen Umfangsrand. Durch die oben genannten vorteilhaften Ausführungen ist ein sehr kompakter Aufbau des Bauteils mit dem Trägerrahmenteil und dem Begrenzungselement erreicht. In besonders vorteilhafter Weise ist vorgesehen, dass das Trägerrahmenteil, der Verbindungssteg und das Begrenzungselement einstückig ausgebildet sind. Eine besonders hohe mechanische Stabilität ist dadurch gegeben. Ferner lässt sich durch eine derartige einstückige Ausgestaltung auch vermeiden, dass unerwünschte Positionstoleranzen auftreten, wie dies beispielsweise bei mehreren separaten Teilen, die dann miteinander montiert und verbunden werden müssen, auftreten kann.

Vorzugsweise ist vorgesehen, dass der Verbindungssteg im Querschnitt der Wandungsanordnung betrachtet an die Kontur des Isolationskörpers angepasst ist und sowohl an einem Seitenrand bzw. einem Umfangsrand des Isolationskörpers als auch an dessen Rückseite anliegt. Insbesondere ist der Verbindungssteg somit derart an dem Isolationskörper angeformt, dass er sich um einen Übergangsbereich zwischen dem genannten Seitenrand und der Rückseite anlegt. Eine derartige Ausgestaltung verstärkt die Haltefunktion des Trägerrahmens zum Halten des Isolationskörpers nochmals wesentlich. Durch den Trägerrahmen, der insbesondere sich zumindest über jede Seite der eckigen Geometrie zumindest bereichsweise erstreckt, wird dadurch eine Haltevorrichtung geschaffen, die den Isolationskörper in den beiden Raumrichtungen der Ebene, in der sich der Isolationskörper erstreckt, sicher positionsfixiert, und andererseits auch in die dritte Raumrichtung senkrecht dazu und somit in Tiefenrichtung entsprechend positionell hält.

Vorzugsweise ist vorgesehen, dass die Begrenzungselemente jeweils dort ausgebildet sind, wo vertikale Trägerrahmenteile vorgesehen sind. Es kann vorgesehen sein, dass Begrenzungselemente bei horizontal orientierten Trägerrahmenteilen nicht ausgebildet sind.

Vorzugsweise ist vorgesehen, dass der Trägerrahmen viereckig ausgebildet ist und an zumindest einem, die eckige Geometrie an einer Geometrieseite begrenzenden, Trägerrahmenteil, insbesondere an zwei gegenüberliegenden vertikalen Trägerrahmenteilen, ein Begrenzungselement angeordnet ist, welches sich zumindest bereichsweise, insbesondere zumindest über 90% der Länge dieser Geometrieseite erstreckt. Die oben genannten Vorteile zur mechanischen Halterung und andererseits zur verbesserten Vermeidung des Wärmeaustauschs sind dadurch besonders begünstigt.

Die bereits oben genannte Multifunktionalität des Begrenzungselements, welches neben der Luftspaltbildung auch unter Aufnahme eines weiteren Funktionsteils ausgebildet ist, ist derart ausgestaltet, dass dieses Funktionsteil ein Türabsteller ist. Dies ist vorteilhaft, da die erste Wandung eine Tür des Haushaltskältegeräts ist. Die Aufzählung spezieller Funktionsteile ist hierdurch nicht begrenzt und es können zusätzlich auch anderweitige Funktionsteile daran angeordnet sein.

Erfindungsgemäß ist der Isolationskörper ein Vakuumisolationselement. Gerade derartige Elemente sind bei herkömmlichen Ausgestaltungen üblicherweise am Innenbehälter oder an eine Innenseite des Außenblechs angeklebt und darüber hinaus auch dann noch zusätzlich mit einem thermischen Isolationsschaum zumindest bereichsweise umschäumt. Neben einem erhöhten Montageaufwand können dabei andere Probleme, wie ein unerwünschtes Verformen der Tür durch schrumpfenden Schaum auftreten.

Insbesondere ist erfindungsgemäß vorgesehen, dass die Wandung mit dem Isolationskörper als Vollvakuumwandung bzw. Vollvakuumtür ausgebildet ist. Dies bedeutet, dass das Vakuumisolationselement nicht mehr zusätzlich mit einem thermischen Isolationsschaum zumindest bereichsweise umschäumt ist. Allein dieses Vakuumisolationselement dient als einziger thermischer Isolationskörper.

Das Vakuumisolationselement ist vorzugsweise plattenartig ausgebildet und umfasst bei einem bevorzugten Ausführungsbeispiel eine Innenschale und eine Außenschale, die miteinander verbunden sein können oder einstückig miteinander ausgebildet sind. Die Schalen können aus spezifischen Kunststoffmaterialien ausgebildet sein, die einlagig oder mehrlagig gestaltet sind. Insbesondere ist vorgesehen, dass der Zwischenraum zwischen der Innenschale und der Außenschale mit einem Füllmaterial gefüllt ist. Dieses Füllmaterial ist vorzugsweise Kieselsäure. Es kann jedoch auch ein anderer poröser Festkörper vorgesehen sein.

Durch die erfindungsgemäße Wandungsanordnung oder eine vorteilhafte Ausgestaltung davon wird insbesondere durch die beabstandeten Begrenzungsseiten der Seitenwandung und des Begrenzungselements ein Dichtungslabyrinth geschaffen, in dem sich stehende Luft zur thermischen Isolation befindet. Dieses Dichtungslabyrinth verringert insbesondere den Wärmeeinfall in den Innenraum, der durch die Wandungsanordnung begrenzt ist, im Bereich der üblicherweise vorgesehenen flexiblen und verformbaren Dichtung zwischen den beiden Wandungen. Dieser gebildete Luftspalt durch das Dichtungslabyrinth ist von besonderer Vorteilhaftigkeit bei den bereits oben erwähnten Vollvakuumwandungen, da diese im Vergleich zu herkömmlichen Wandungen, bei denen ein Isolationskörper und zusätzlich ein thermisch isolierender Schaum vorgesehen ist, deutlich dünner sind.

Gerade die Multifunktionalität des Begrenzungselements mit der Funktion der Aufnahme von zusätzlichen Funktionsbauteilen bringt den Vorteil, dass kein Anbringen von entsprechenden Holmen an der ersten Wandung mehr erforderlich ist, was wesentliche Vorteile beim Tiefziehen und im nachfolgenden Herstellungsprozess mit sich bringt. Darüber hinaus ergeben sich durch die Wandungsanordnung größere geometrische Freiheiten aufgrund unterschiedlicher Gestaltungs- und Fertigungsmöglichkeiten. Gerade die Befestigung von Funktionsteilen an dem Begrenzungselement bringt auch den deutlichen Vorteil, dass diese nicht an dem Isolationskörper befestigt werden müssen und dadurch keine unerwünschte Krafteinleitung in dem Isolationskörper erfolgt.

Des Weiteren betrifft die Erfindung ein Haushaltskältegerät zur Aufnahme von Lebensmittel in einem Innenraum mit einer Wandungsanordnung gemäß der Erfindung oder einer vorteilhafte Ausgestaltung davon.

Insbesondere ist durch die Wandungsanordnung ein Innenraum des Haushaltskältegeräts zur Aufnahme von Lebensmitteln begrenzt.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind.

Ausführungsbeispiele der Erfindung werden nachfolgend anhand schematischer Zeichnungen näher erläutert. Es zeigen:
- Fig. 1: eine perspektivische Darstellung eines Ausführungsbeispiels eines erfindungsgemäßen Haushaltskältegeräts;
- Fig. 2: eine perspektivische Ansicht von hinten einer als Tür ausgebildeten Wandung des Haushaltskältegeräts gemäß Fig. 1;
- Fig. 3: eine Explosionsdarstellung des Ausführungsbeispiels der Tür gemäß Fig. 2;
- Fig. 4: eine Querschnittdarstellung bzw. Horizontalschnittdarstellung des Haushaltskältegeräts gemäß Fig. 1 bei geschlossener Tür;
- Fig. 5: eine perspektivische Darstellung eines weiteren Ausführungsbeispiels einer als Tür ausgebildeten ersten Wandung mit spezifischen Bauteilen;
- Fig. 6: die Darstellung gemäß Fig. 5 mit zusätzlichen Verbindungsteilen; und
- Fig. 7: eine vergrößerte Darstellung der Ausführung in Fig. 6.

In den Figuren werden gleiche oder funktionsgleiche Elemente mit den gleichen Bezugszeichen versehen.

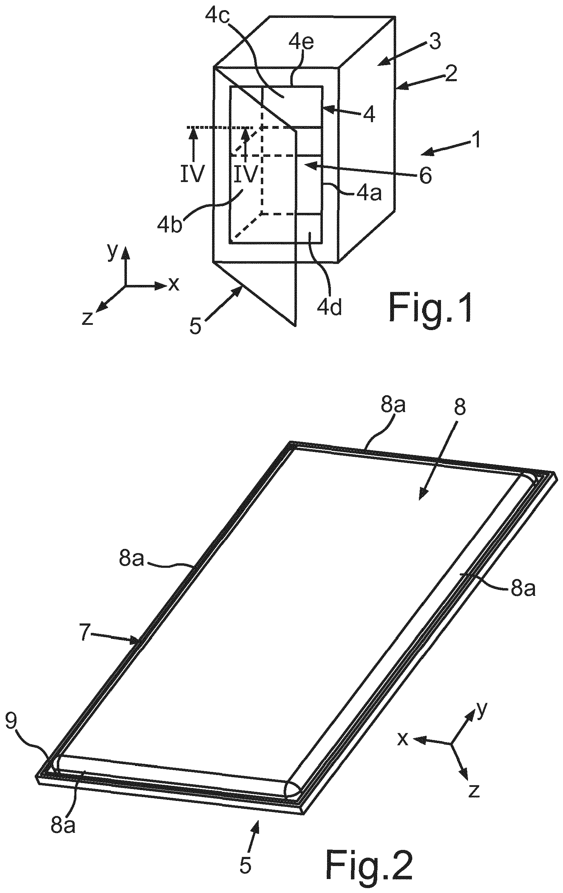

In Fig. 1 ist in einer perspektivischen Darstellung ein Haushaltskältegerät 1 gezeigt, welches zur Aufnahme von Lebensmitteln, wie beispielsweise Getränken und Speisen, ausgebildet ist. Das Haushaltskältegerät 1 kann beispielsweise ein Kühlgerät oder ein Gefriergerät oder ein Kühl-Gefrier-Kombigerät sein.

Das Haushaltskältegerät 1 umfasst ein Gehäuse 2, welches ein Außengehäuse bzw. einem Außenbehälter 3 und ein darin angeordnetes Innengehäuse umfasst, welches ein Innenbehälter 4 ist. Der Außenbehälter 3 umgibt den Innenbehälter 4, wobei beide frontseitig eine Beschickungsöffnung aufweisen, die durch eine Tür 5 verschließbar ist. Der Innenbehälter 4 begrenzt mit seitlichen Wänden bzw. seitlichen Wandungen 4a und 4b sowie einer Rückwand bzw. einer hinteren Wandung 4c, sowie einer Bodenwandung 4d und einer Deckenwandung 4e einen Innenraum 6. Abhängig davon, wie das Haushaltskältegerät 1 ausgebildet ist, kann dieser Innenraum vollständig ein Kühlfach sein oder ein No-Frost-Fach umfassen, oder ein Gefrierfach sein. Es kann auch vorgesehen sein, dass das Haushaltskältegerät 1 als Innenraum 6 ein Kühlfach aufweist, in dem innenliegend ein Gefrierfach integriert ist, welches insbesondere dann durch eine weitere eigene Gefrierfach-Tür verschließbar ist.

Im Ausführungsbeispiel ist vorgesehen, dass die Tür 5 zum Verschließen des Innenraums 6 eine Vakuumisolationstür, insbesondere eine Vollvakuumtür, ist. Dazu ist vorgesehen, dass die Tür 5 zumindest ein Vakuumisolationselement, welches einen thermischen Isolationskörper darstellt, aufweist. Die Tür 5 stellt darüber hinaus ebenfalls eine Wandung des Haushaltskältegeräts 1 dar.

In Fig. 2 ist in einer perspektivischen Ansicht auch eine Innenseite 7 der Tür 5 mit dem Vakuumisolationselement 8 dargestellt. Die Tür 5 umfasst neben dem plattenartigen rechteckigen Vakuumisolationselement 8 einen Trägerrahmen 9. Der Trägerrahmen 9 umgreift umfangsseitig das Vakuumisolationselement 8 vollständig. Das Vakuumisolationselement 8 ist somit von dem Trägerrahmen 9 gehalten.

Der Trägerrahmen 9 ist ebenfalls rechteckig gestaltet und mehrteilig ausgebildet. Selbstverständlich wäre ebenso ein einstückiger Trägerrahmen 9 denkbar.

Der Trägerrahmen 9 ist darüber hinaus aus Kunststoff ausgebildet und insbesondere durch Spritzgussteile und extrudierte Kunststoffteile realisiert. Es kann vorgesehen sein, dass der Trägerrahmen 9 aus einem einzigen Kunststoffmaterial oder aus zumindest zwei unterschiedlichen Kunststoffmaterialien ausgebildet ist.

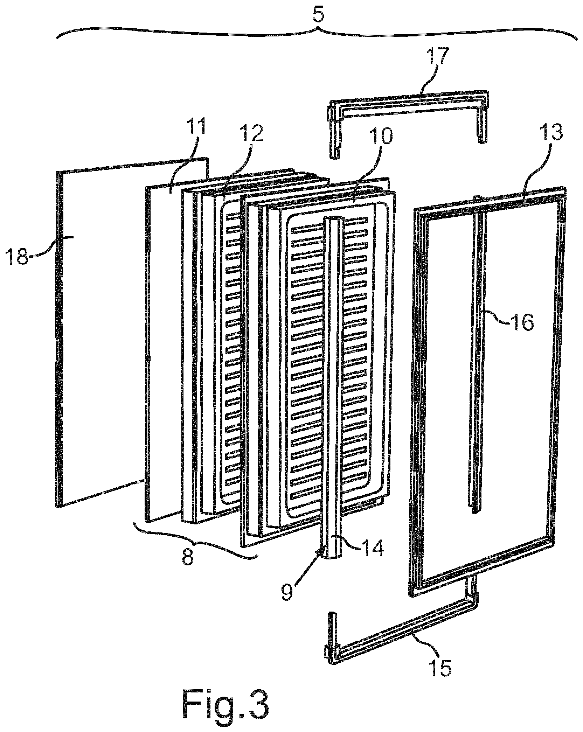

In Fig. 3 ist in einer Explosionsdarstellung die Tür 5 gezeigt.

Es ist dabei zu erkennen, dass das Vakuumisolationselement 8 eine hintere bzw. Innenschale 10 aufweist, die einstückig aus Kunststoff ausgebildet ist. Darüber hinaus umfasst das Vakuumisolationselement 8 eine vordere Schale bzw. eine Außenschale 11, welche ebenfalls einstückig aus Kunststoff ausgebildet ist. Im zusammengesetzten Zustand des Vakuumisolationselements 8 sind die beiden Schalen 10 und 11 miteinander verbunden. Beispielsweise kann hier ein Verkleben oder Verschweißen vorgesehen sein. In dem zwischen den Schalen 10 und 11 gebildeten Zwischenraum bzw. Hohlraum ist ein Füllkörper bzw. Stützkörper 12 eingebracht. Beispielsweise kann hier ein poröser Festkörper vorgesehen sein. In bevorzugter Weise ist Kieselsäure als Füllmaterial vorgesehen. Dieser Zwischenraum zwischen den Schalen 10 und 11 ist evakuiert.

Darüber hinaus ist in Fig. 3 eine umlaufende Dichtung 13 gezeigt, die im zusammengesetzten Zustand an dem Trägerrahmen 9 angeordnet ist. Der Trägerrahmen 9 ist somit multifunktionell gestaltet und zur Aufnahme mehrerer unterschiedlicher separater gegenständlicher Komponenten vorgesehen. Neben der Dichtung 13 kann darüber hinaus jedoch auch noch ein anderes Funktionsbauteil zusätzlich an dem Trägerrahmen 9 angeordnet sein. Beispielsweise können hier ein Scharnier und/oder eine Lagereinheit und/oder ein Versteifungsteil vorgesehen sein.

Im Ausführungsbeispiel umfasst der Trägerrahmen 9 durch seine rechteckige Formgebung vier Trägerrahmenteile 14, 15, 16 und 17. Die beiden Trägerrahmenteile 14 und 16, welche geradlinige längliche Bauteile sind, erstrecken sich vertikal und parallel. Ebenso erstrecken sich die horizontal angeordneten Trägerrahmenteile 15 und 17 parallel zueinander.

Die Tür 5 umfasst darüber hinaus eine außenseitige bzw. frontseitige Abdeckung 18, die beispielweise ein plattenartiges Außenblech ist.

In zumindest einem der Trägerrahmenteile 14 bis 17 kann auch integriert und somit innenliegend ein metallisches Versteifungsteil eingebettet sein. Insbesondere ist diese Integration derart, dass das metallische Versteifungsteil vollständig von dem Kunststoffmaterial des Trägerrahmenteils 14 bis 17 umschlossen ist.

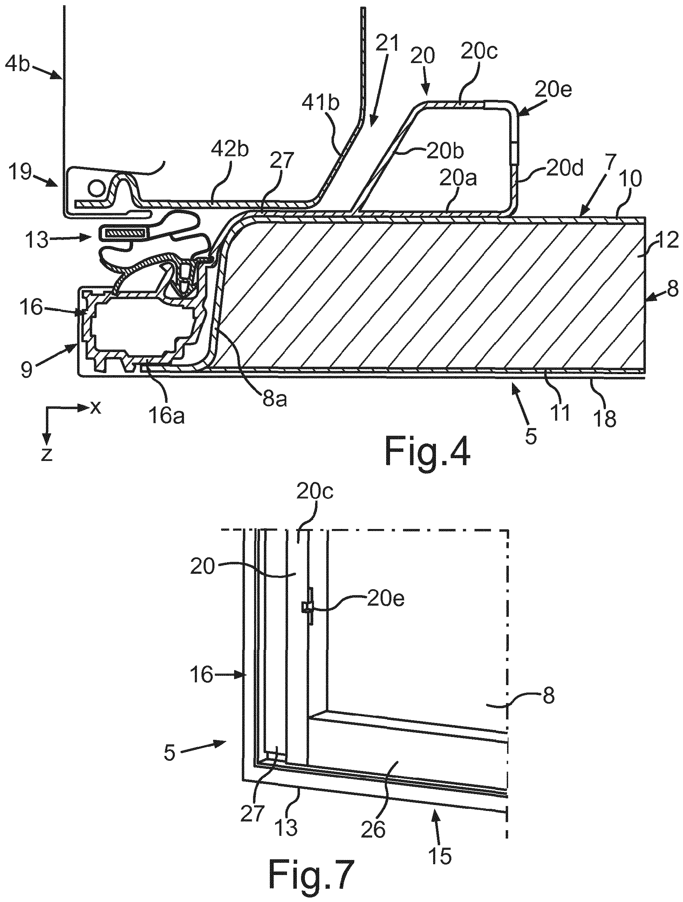

In Fig. 4 ist in einer Horizontalschnittdarstellung und somit in einem Schnitt in der x-z-Ebene in Fig. 1 ein Teilausschnitt des Haushaltskältegeräts 1 gezeigt. Bei der Darstellung in Fig. 4 ist eine Wandungsanordnung 19 gezeigt, die eine erste Wandung aufweist, die durch die Tür 5 gebildet ist. Die Tür 5, wie bereits erläutert wurde, umfasst den Isolationskörper, der als Vakuumisolationselement 8 ausgebildet ist. Die Tür 5 umfasst im Ausführungsbeispiel ausschließlich dieses zumindest eine Vakuumisolationselement 8 und ist daher in Tiefenrichtung (z-Richtung) sehr dünn ausgebildet. Zusätzlicher thermischer Isolationsschaum, der den Isolationskörper zumindest teilweise umgibt, ist nicht vorgesehen.

Die Wandungsanordnung 19 umfasst neben der Tür 5 eine zweite Wandung, die durch die vertikale Seitenwand 4b gebildet ist. Wie in der Schnittdarstellung zu erkennen ist, ist das Trägerrahmenteil 16 des Trägerrahmens 9 seitlich zum Vakuumisolationselement 8 angeordnet. In Tiefenrichtung erstreckt sich das als Hohlprofilkörper ausgebildete Trägerrahmenteil 16 nicht über die Ausmaße des Vakuumisolationselement 8 hinaus. Es ist somit lediglich seitlich zum Vakuumisolationselement 8 und somit benachbart zum Seitenrand bzw. Umfangsrand 8a angeordnet.

Das Trägerrahmenteil 16 umfasst darüber hinaus ein Begrenzungselement 20. Das Begrenzungselement 20 ist ebenfalls als Hohlprofil ausgebildet und analog zur Ausgestaltung des Trägerrahmenteils 16 in der Horizontalschnittdarstellung vollständig umlaufend und somit geschlossen ausgebildet. Der Hohlraum ist somit hier vollständig umfangsseitig begrenzt. Das Begrenzungselement 20 ist in Tiefenrichtung betrachtet vollständig hinter dem Vakuumisolationselement 8 ausgebildet und angeordnet. In Breitenrichtung (x-Richtung) ist es ebenfalls vollständig innerhalb der Breite des Vakuumisolationselement 8 angeordnet. Das Begrenzungselement 20 weist eine am Vakuumisolationselement 8 bzw. an dessen Rückseite 7 anliegende Begrenzungsseite 20a auf. Daran anschließend ist eine Begrenzungsseite 20b gebildet, die der benachbarten Seitenwand 4b zugewandt ist.

Der Rückseite 4c des Innenbehälters ist eine weitere Begrenzungsseite 20c zugewandt, wobei diese dann in eine der gegenüberliegenden Seitenwand 4a zugewandte Begrenzungsseite 20d übergeht. Der so geometrisch gebildete Querschnitt des Begrenzungselements 20 ermöglicht ebenfalls eine Multifunktionalität. Diese dahingehend, dass das Element 20 von dem Vakuumisolationselement 8 wegführend betrachtet schräg zur Seitenwand 4a hin orientierte Begrenzungsseite 20b aufweist. Diese ist beabstandet und zumindest bereichsweise parallel zu einer Begrenzungsseite 41 b der Seitenwand 4b angeordnet. Durch diese Ausgestaltung wird ein Luftspalt 21 zwischen den Begrenzungsseiten 20b und 41 b gebildet. Wie darüber hinaus zu erkennen ist, umfasst das Trägerrahmenteil 16 einen Verbindungssteg 27, der hohlraumfrei und im Querschnitt als dünner Streifen ausgebildet ist. Dieser verbindet einen Hohlkörper 16a des Trägerrahmenteils 16 mit dem Begrenzungselement 20. Es ist dabei zu erkennen, dass dieser Verbindungssteg 27 in der Querschnittdarstellung eine Formgebung aufweist, die an die Rückseite 7 und den Seitenrand bzw. Umfangsrand 8a angepasst und daran anliegend angeformt ist. Der Verbindungssteg 27 bildet darüber hinaus eine Begrenzungswand für den Luftspalt 21 zum Vakuumisolationselement 8 hin. Des Weiteren ist aus der Darstellung in Fig. 4 zu erkennen, dass eine Vorderseite 42b der Seitenwand 4b im geschlossenen Zustand der Tür 5, wie sie in Fig. 4 gezeigt ist, an dem Verbindungssteg 27 anliegt. Wie aus der Darstellung in Fig. 4 zu erkennen ist, sind die Wandungen in Form der Tür 5 und der Seitenwand 4b im geschlossenen Zustand der Tür 5 im Wesentlichen im 90°-Winkel zueinander angeordnet.

Der Luftspalt 21 erstreckt sich über seine gesamte Länge in Tiefenrichtung betrachtet hinter der Rückseite 7 des Vakuumisolationselements 8. Darüber hinaus ist in Breitenrichtung betrachtet der Luftspalt 21 ebenfalls über seine gesamte Länge vollständig innerhalb der Ausmaße des Vakuumisolationselements 8 angeordnet. Insbesondere ist vorgesehen, dass das Begrenzungselement 20 darüber hinaus auch noch als Halterung für zumindest ein weiteres Funktionsteil, beispielsweise einen Türabsteller, ausgebildet ist. Dazu kann eine Aufnahme 20e in dem Begrenzungselement 20, vorzugsweise in den Begrenzungsseiten 20c und/oder 20d ausgebildet sein. In diese kann der Türabsteller dann insbesondere zerstörungsfrei lösbar eingebracht werden.

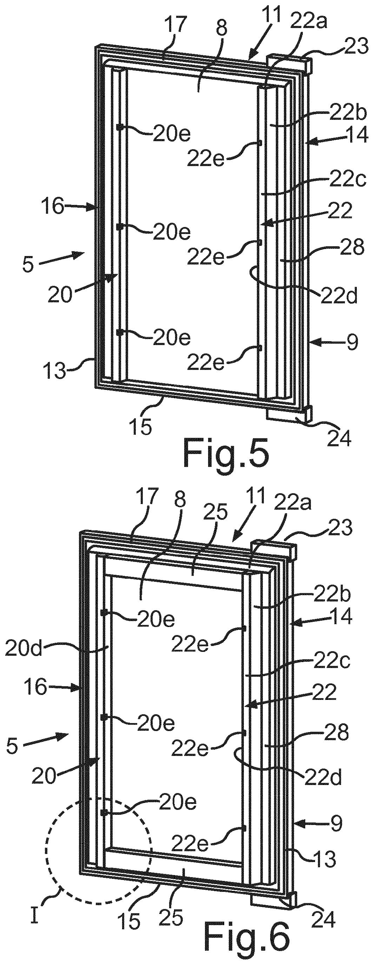

In Fig. 5 ist in einer perspektivischen Darstellung eine Ansicht auf ein weiteres Ausführungsbeispiel einer als Tür 5 ausgebildeten ersten Wandung dargestellt, welche unterschiedlich zur Ausgestaltung in Fig. 2 ist. Bei der Ausgestaltung in Fig. 2 ist vorzugsweise vorgesehen, dass der Trägerrahmen 9 vollständig umlaufend ausgebildet ist und auch das Begrenzungselement 20 vollständig umlaufend gestaltet ist. In Fig. 2 ist der Übersichtlichkeit dienend das Begrenzungselement 20 nicht explizit gezeigt.

In Fig. 5 ist demgegenüber vorgesehen, dass nur die vertikalen Trägerrahmenteile 14 und 16 jeweils Begrenzungselemente 20 und 22 aufweisen. Wie zu erkennen ist, erstrecken sich die Begrenzungselemente 20 und 22 geradlinig in Höhenrichtung und somit in y-Richtung und darüber hinaus insbesondere zumindest über 90% der Länge der jeweiligen Geometrieseiten des viereckigen Trägerrahmens 9. In Fig. 5 sind darüber hinaus beispielhaft auch Scharniere 23 und 24 gezeigt, mittels welcher die Tür 5 an dem Gehäuse 2 angeschlagen ist.

In Fig. 5 sind ebenfalls die Begrenzungsseiten 22a, 22b, 22c und 22d des Begrenzungselements 22 eingezeichnet und darüber hinaus in Fig. 6 auch Aufnahmen 22e für weitere Funktionsteile.

Darüber hinaus ist in Fig. 5 und Fig. 6 auch ein Verbindungssteg 28 analog zum Verbindungssteg 27 bei dem Begrenzungselement 22 gezeigt.

Zur Versteifung der Ausgestaltung in Fig. 5 ist vorgesehen, dass gemäß der Darstellung in Fig. 6 Verbindungsteile 25 und 26 horizontal angeordnet sind, die in entsprechende Aussparungen in einander zugewandten Begrenzungsseiten 20d und 22d ausgebildet sind. Die Verbindungsteile 25 und 26 sind in dem Zusammenhang am oberen bzw. unteren Ende eingehängt und befestigt, so dass auch hier mit maximalen Ausmaßen eine viereckige bzw. rechteckige Geometrie gestaltet ist. Die mechanische Stabilität der gesamten Konstruktion ist dadurch erhöht.

In Fig. 7 ist ein vergrößerter Teilausschnitt gemäß I aus Fig. 6 gezeigt. Es ist hierbei auch die vergrößerte Darstellung der Aufnahme 20e in den Begrenzungsseiten 20c und 20d des Begrenzungselements 20 gezeigt.

### Bezugszeichenliste

- 1: Haushaltskältegerät
- 2: Gehäuse
- 3: Außengehäuse
- 4: Innengehäuse
- 4a, 4b: Seitliche Wandungen
- 4c: Hintere Wandung
- 4d: Bodenwandung
- 4e: Deckenwandung
- 5: Tür
- 6: Innenraum
- 7: Innenseite
- 8: Vakuumisolationselement
- 8a: Umfangsrand
- 9: Trägerrahmen
- 10: Innenschale
- 11: Außenschale
- 12: Stützkörper
- 13: Dichtung
- 14: Trägerrahmenteil
- 15: Trägerrahmenteil
- 16: Trägerrahmenteil
- 16a: Erstes Teil
- 17: Trägerrahmenteil
- 18: Abdeckung
- 19: Wandungsanordnung
- 20: Begrenzungselement
- 20a, 20b, 20c, 20d: Begrenzungsseite
- 20e: Aufnahme
- 21: Luftspalt
- 22: Begrenzungselement
- 22a, 22b, 22c, 22d: Begrenzungsseite
- 22e: Aufnahme
- 23,24: Scharniere
- 25,26: Verbindungsteil
- 27,28: Verbindungssteg

- 41 b: Begrenzungsseite
- 42b: Vorderseite

## Patentansprüche

1. Haushaltskältegerät (1) mit einer Wandungsanordnung (19), die Wandungsanordnung (19) mit einer ersten Wandung(5), die einen thermischen Isolationskörper (8) aufweist, und mit einer zweiten Wandung (4a bis 4e), die benachbart und in einem Winkel zum Isolationskörper (8) angeordnet ist, wobei der Isolationskörper (8) ein Vakuumisolationselement ist und von einem Trägerrahmen (9) der ersten Wandung (5) gehalten und umfangseitig zumindest bereichsweise umgeben ist, und der Trägerrahmen (9) ein Begrenzungselement (20, 22) aufweist, welches sich in Tiefenrichtung (z-Richtung) der ersten Wandung (5) betrachtet hinter einer Rückseite (7) des Isolationskörpers (8) erstreckt und eine der zweiten Wandung (4a bis 4e) zugewandte und davon beabstandete Begrenzungsseite (20b, 22b) aufweist, die mit einer Begrenzungsseite (41 b) der zweiten Wandung (4a bis 4e) einen Luftspalt (21) begrenzt, **dadurch gekennzeichnet, dass** die erste Wandung eine Vollvakuumtür des Haushaltskältegeräts (1) ist und dass das Begrenzungselement (20, 22) eine Aufnahme (20e, 22e) für ein Funktionsteil aufweist und an dem Begrenzungselement (20, 22) ein Türabsteller als Funktionsteil angeordnet ist.

2. Haushaltskältegerät (1) nach Anspruch 1, **dadurch gekennzeichnet, dass** der Luftspalt (21) sich vollständig hinter der Rückseite (7) erstreckt.

3. Haushaltskältegerät (1) nach Anspruch 1 oder 2, **dadurch gekennzeichnet, dass** der Luftspalt (21) in Tiefenrichtung betrachtet von dem Isolationskörper (8) schräg nach hinten verlaufend angeordnet ist.

4. Haushaltskältegerät (1) nach einem der vorhergehenden Ansprüche, **dadurch gekennzeichnet, dass** das Begrenzungselement (20, 22) ein Hohlprofilkörper ist, insbesondere ein im Querschnitt geschlossener Hohlprofilkörper ist.

5. Haushaltskältegerät (1) nach einem der vorhergehenden Ansprüche, **dadurch gekennzeichnet, dass** der Trägerrahmen (9) eckig ausgebildet ist und die eckige Geometrie bildende Trägerrahmenteile (14 bis 17) aufweist.

6. Haushaltskältegerät (1) nach Anspruch 5, **dadurch gekennzeichnet, dass** die Trägerrahmenteile (14 bis 17) zumindest bereichsweise als Hohlprofilkörper ausgebildet sind, insbesondere im Querschnitt geschlossene Hohlprofilkörper sind.

7. Haushaltskältegerät (1) nach Anspruch 5 und 6, **dadurch gekennzeichnet, dass** ein erstes, insbesondere hohles, Teil (16a) des Trägerrahmenteils (14 bis 17) und das Begrenzungselement (20, 22) im Querschnitt betrachtet beabstandet zueinander angeordnet sind und mit einem Verbindungssteg (27, 28) verbunden sind, insbesondere einstückig ausgebildet sind.

8. Haushaltskältegerät (1) nach Anspruch 7, **dadurch gekennzeichnet, dass** der Verbindungssteg (27, 28) im Querschnitt betrachtet an die Kontur des Isolationskörpers (8) angepasst ist und an einem Seitenrand (8a) des Isolationskörpers (8) und dessen Rückseite (7) anliegt.

9. Haushaltskältegerät (1) nach einem der vorhergehenden Ansprüche, **dadurch gekennzeichnet, dass** der Trägerrahmen (9) viereckig ausgebildet ist und an zumindest einem, die eckige Geometrie an einer Geometrieseite begrenzenden Trägerrahmenteil (14 bis 17), insbesondere an zwei gegenüberliegenden vertikalen Trägerahmenteilen (14 bis 17), ein Begrenzungselement (20, 22) angeordnet ist, welches sich zumindest bereichsweise, insbesondere zumindest über 90% der Länge der Geometrieseite erstreckt.

10. Haushaltskältegerät (1) nach einem der vorhergehenden Ansprüche, **dadurch gekennzeichnet, dass** durch die Wandungsanordnung (19) ein Innenraum (6) für Lebensmittel begrenzt ist.

## Claims

1. Household refrigeration appliance (1) with a wall arrangement (19), the wall arrangement (19) with a first wall (5), which has a thermal insulation element (8), and with a second wall (4a to 4e), which is arranged adjacent to and at an angle to the insulation element (8), wherein the insulation element (8) is a vacuum insulation element and is held by a support frame (9) of the first wall (5) and is surrounded circumferentially at least in regions, and the support frame (9) has a bounding element (20, 22), which extends behind a rear (7) of the insulation element (8) when viewed in the depth direction (z direction) of the first wall (5) and has a bounding side (20b, 22b) facing the second wall (4a to 4e) and spaced apart therefrom, which, with a bounding side (41b) of the second wall (4a to 4e), bounds an air gap (21), **characterised in that** the first wall is a full vacuum door of the household refrigeration appliance (1) and that the bounding element (20, 22) has a holder (20e, 22e) for a functional part and a door tray is arranged on the bounding element (20, 22) as a functional part.

2. Household refrigeration appliance (1) according to claim 1, **characterised in that** the air gap (21) extends completely behind the rear (7).

3. Household refrigeration appliance (1) according to claim 1 or 2, **characterised in that** the air gap (21) is arranged so as to run obliquely downward from the insulation element (8) when viewed in the depth direction.

4. Household refrigeration appliance (1) according to one of the preceding claims, **characterised in that** the bounding element (20, 22) is a hollow profile element, in particular a hollow profile element with a closed cross-section.

5. Household refrigeration appliance (1) according to one of the preceding claims, **characterised in that** the support frame (9) is embodied to be angular and has the support frame parts (14 to 17) which form the angular geometry.

6. Household refrigeration appliance (1) according to claim 5, **characterised in that** the support frame parts (14 to 17) are embodied, at least in regions, as hollow profile elements, in particular hollow profile elements with a closed cross-section.

7. Household refrigeration appliance (1) according to claim 5 or 6, **characterised in that** a first, in particular hollow, part (16a) of the support frame part (14 to 17) and the bounding element (20, 22) are arranged at a distance from one another when viewed in the cross-section and are connected to a connecting web (27, 28), in particular embodied in one piece.

8. Household refrigeration appliance (1) according to claim 7, **characterised in that** the connecting web (27, 28) is adjusted to the contour of the insulation element (8) when viewed in the cross-section and rests on a side edge (8a) of the insulation element (8) and its rear (7).

9. Household refrigeration appliance (1) according to one of the preceding claims, **characterised in that** the support frame (9) is embodied to be square and a bounding element (20, 22) is arranged on at least one support frame part (14 to 17) which bounds the angular geometry on a geometry side, in particular on two opposing vertical support frame parts (14 to 17), which bounding element extends, at least in regions, in particular at least over 90% of the length of the geometry side.

10. Household refrigeration appliance (1) according to one of the preceding claims, **characterised in that** an interior (6) for groceries is bounded by the wall arrangement (19).

## Revendications

1. Appareil frigorifique ménager (1) avec un agencement de parois (19), l'agencement de parois (19) est disposé avec une première paroi (5), qui présente un corps d'isolation thermique (8), et avec une deuxième paroi (4a à 4e), qui est disposée en position adjacente et selon un angle par rapport au corps d'isolation (8), dans lequel le corps d'isolation (8) est un élément d'isolation à vide et est maintenu par un cadre de support (9) de la première paroi (5) et est entouré côté périphérie au moins par endroits, et le cadre de support (9) présente un élément de délimitation (20, 22), lequel s'étend dans la direction de la profondeur (direction z) de la première paroi (5) en regardant derrière une face arrière (7) du corps d'isolation (8) et présente une face de délimitation (20b, 22b) orientée vers la deuxième paroi (4a à 4e) et écartée de celle-ci, laquelle face de délimitation délimite un entrefer (21) avec une face de délimitation (41 b) de la deuxième paroi (4a à 4e), **caractérisé en ce que** la première paroi est une porte à vide total de l'appareil frigorifique ménager (1) et **en ce que** l'élément de délimitation (20, 22) présente un logement (20e, 22e) pour une pièce fonctionnelle et au niveau de l'élément de délimitation (20, 22) est disposé un rangement de porte en tant que pièce fonctionnelle.

2. Appareil frigorifique ménager (1) selon la revendication 1, **caractérisé en ce que** l'entrefer (21) s'étend entièrement derrière la face arrière (7).

3. Appareil frigorifique ménager (1) selon la revendication 1 ou 2, **caractérisé en ce que** l'entrefer (21) est disposé en s'étendant vers l'arrière incliné par rapport au corps d'isolation (8) en regardant dans la direction de la profondeur.

4. Appareil frigorifique ménager (1) selon l'une des revendications précédentes, **caractérisé en ce que** l'élément de délimitation (20, 22) est un corps profilé creux, en particulier un corps profilé creux fermé sur la section transversale.

5. Appareil frigorifique ménager (1) selon l'une des revendications précédentes, **caractérisé en ce que** le cadre de support (9) est configuré de manière angulaire et la géométrie angulaire présente des pièces de cadre de support constitutives (14 à 17).

6. Appareil frigorifique ménager (1) selon la revendication 5, **caractérisé en ce que** les pièces de cadre de support (14 à 17) sont configurées au moins par endroits en tant que corps profilés creux, en particulier des corps profilés creux fermés sur la section transversale.

7. Appareil frigorifique ménager (1) selon les revendications 5 et 6, **caractérisé en ce qu'**une première partie, en particulier creuse, (16a) de la pièce de cadre de support (14 à 17) et l'élément de délimitation (20, 22) sont disposés à distance l'un de l'autre en regardant la coupe transversale et sont reliés avec une barrette de liaison (27, 28), en particulier configurés d'un seul tenant.

8. Appareil frigorifique ménager (1) selon la revendication 7, **caractérisé en ce que** la barrette de liaison (27, 28) est adaptée au contour du corps d'isolation (8) en regardant la coupe transversale et repose contre un rebord latéral (8a) du corps d'isolation (8) et de sa face arrière (7).

9. Appareil frigorifique ménager (1) selon l'une des revendications précédentes, **caractérisé en ce que** le cadre de support (9) est configuré de manière quadrangulaire et au niveau d'au moins une pièce de cadre de support (14 à 17) délimitant la géométrie angulaire au niveau d'une face de géométrie, en particulier au niveau de deux pièces de cadre de support (14 à 17) verticales opposées, est disposé un élément de délimitation (20, 22), lequel s'étend au moins par endroits, en particulier au moins sur plus de 90 % de la longueur de la face de géométrie.

10. Appareil frigorifique ménager (1) selon l'une des revendications précédentes, **caractérisé en ce qu'**un espace intérieur (6) est délimité pour des aliments par le biais de l'agencement de parois (19).
